# EUROPEAN PATENT SPECIFICATION

(11) **EP 3 559 656 B1**
(45) Date of publication and mention of the grant of the patent: **02.04.2025**
(21) Application number: 17829199.3
(22) Date of filing: 21.12.2017
(51) Int. Cl.: G01N 30/06, G01N 33/58, G01N 30/28, G01N 30/34, G01N 30/46, G01N 30/72

(54) **METHOD FOR TRACKING A SAMPLE IDENTITY DURING A PROCESS IN AN ANALYSIS SYSTEM**
VERFAHREN ZUR VERFOLGUNG EINER PROBENIDENTITÄT WÄHREND EINES VERFAHRENS IN EINEM ANALYSESYSTEM
PROCÉDÉ DE SUIVI D'UNE IDENTITÉ D'ÉCHANTILLON AU COURS D'UN PROCESSUS DANS UN SYSTÈME D'ANALYSE

(30) Priority: 23.12.2016 EP 16206596
(43) Date of publication of application: 30.10.2019
(73) Proprietor: Roche Diagnostics GmbH, 68305 Mannheim (DE); F. Hoffmann-La Roche AG, 4070 Basel (CH)
(72) Inventor: HEINDL, Dieter, 82377 Penzberg (DE); KOBOLD, Uwe, 82377 Penzberg (DE); REMPT, Martin, 82377 Penzberg (DE); SEIDEL, Christoph, 82377 Penzberg (DE)
(74) Representative: Altmann Stößel Dick Patentanwälte PartG mbB
(86) International application number: PCT/EP2017/084023
(87) International publication number: WO 2018/115243

(56) References cited:
- EP-A1- 2 108 957
- WO-A1-00/64557
- US-A1- 2014 158 881
- US-A1- 2016 169 902
- US-B2- 7 816 304

## Description

### TECHNICAL FIELD

A method for tracking a sample identity during a process in an analysis system is disclosed.

### BACKGROUND

There is growing interest for the implementation of mass spectrometry and more specifically of liquid chromatography coupled to tandem mass spectrometry (LC-MS/MS) in different types of laboratories such as a clinical laboratory. The number of published methods especially for small molecules in therapeutic drug monitoring or drug of abuse testing is increasing.

Some ready to use kits for pre-validated clinical MS applications are becoming commercially available. The use of mass spectrometry, however, even in connection with such kits, may not be regulatory approved for clinical diagnostics. This is mostly because of lack of standardized procedures, except for a very few analytes, and because of the still large number of user dependent factors, e.g. due to a number of manual steps that are still conducted and the diversity of hardware components that may be used and combined, and that play a role in delivering reliable and reproducible results of clinical relevance. In particular, sample preparation is typically a manual and tedious procedure. Protein precipitation with subsequent centrifugation is the most popular method to remove unwanted and potentially disturbing sample matrix. The use of kits may in part facilitate sample preparation that can be at least in part automated. Kits are however available only for a limited number of analytes of interest and the entire process from sample preparation, to separation and detection remains complex, requiring the attendance of highly trained laboratory personnel to run highly sophisticated instruments.

Also, typically, a batch approach is followed, where a batch of samples prepared in advance under the same preparation conditions undergo consecutive separation runs under the same separation conditions. This approach however does not enable high throughput and is not flexible, e.g. does not allow re-scheduling (changing a pre-defined processing sequence) in view for example of incoming emergency samples that have higher priority and have to be processed first.

The implementation of liquid chromatography coupled to tandem mass spectrometry allows to process several samples in parallel. Ensuring traceability of sample identity during complex, highly parallelized, random access sample preparation processes is a critical issue. This is particularly critical in multiplexed HPLC-MS systems, where multiple samples are simultaneously in parallel and partly the same liquid flow path. In such cases the sample identity is only given by correct timing and positioning of diverting valves regulating the flow paths which makes the handling of the samples rather complex.

US 7 816 304 B2 relates to methods of analysis by mass spectrometry using specific mass labels.

### SUMMARY

Embodiments of the disclosed method aim to make traceability of sample identity in an analysis system using liquid chromatography coupled to mass spectrometry more convenient and more reliable and therefore suitable for specific analytical methods such as clinical diagnostics. In particular, high-throughput, e.g. up to 100 samples/hour or more with random access sample preparation and LC separation can be obtained while the respective samples may be tracked throughout the complete process. Moreover the method can be fully automated increasing the walk-away time and decreasing the level of skills required.

Disclosed herein is a method for tracking a sample identity during a process in an analysis system, wherein the analysis system comprises a liquid chromatograph and a mass spectrometer.

Embodiments of the disclosed method for tracking a sample identity during a process in an analysis system have the features of the independent claim. Further embodiments of the invention, which may be realized in an isolated way or in any arbitrary combination, are disclosed in the dependent claims.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "particularly", "more particularly", "specifically", "more specifically" or similar terms are used in conjunction with additional / alternative features, without restricting alternative possibilities. Thus, features introduced by these terms are additional / alternative features and are not intended to restrict the scope of the claims in any way. The invention may, as the skilled person will recognize, be performed by using alternative features, as long as they are within the scope of the invention. Similarly, features introduced by "in an embodiment of the invention" or similar expressions are intended to be additional / alternative features, without any restriction regarding alternative embodiments of the invention, without any restrictions regarding the scope of the invention and without any restriction regarding the possibility of combining the features introduced in such way with other additional / alternative or non-additional / alternative features of the invention. The scope of the invention is defined by the appended claims.

According to the disclosed method, a method for tracking a sample identity during a process in an analysis system according to claim 1 is disclosed.

The term "analysis system" as used herein encompasses any system comprising at least a liquid chromatograph and a mass spectrometer configured to obtain a measurement value. An analysis system is operable to determine via various chemical, biological, physical, optical or other technical procedures a parameter value of the sample or a component thereof. An analysis system may be operable to measure said parameter of the sample or of at least one analyte and return the obtained measurement value. The list of possible analysis results returned by the analyzer comprises, without limitation, concentrations of the analyte in the sample, a digital (yes or no) result indicating the existence of the analyte in the sample (corresponding to a concentration above the detection level), optical parameters, DNA or RNA sequences, data obtained from mass spectroscopy of proteins or metabolites and physical or chemical parameters of various types. An analysis system may comprise units assisting with the pipetting, dosing, and mixing of samples and/or reagents. The analysis system may comprise a reagent holding unit for holding reagents to perform the assays. Reagents may be arranged for example in the form of containers or cassettes containing individual reagents or group of reagents, placed in appropriate receptacles or positions within a storage compartment or conveyor. It may comprise a consumable feeding unit. The analysis system may comprise a process and detection system whose workflow is optimized for certain types of analysis. Examples of such analysis systems are clinical chemistry analyzers, coagulation chemistry analyzers, immunochemistry analyzers, urine analyzers, nucleic acid analyzers, used to detect the result of chemical or biological reactions or to monitor the progress of chemical or biological reactions.

The analysis system may be designed as a clinical diagnostics system or may be part of a clinical diagnostics system.

A "clinical diagnostics system" as used herein refers to a laboratory automated apparatus dedicated to the analysis of samples for in vitro diagnostics. The clinical diagnostics system may have different configurations according to the need and/or according to the desired laboratory workflow. Additional configurations may be obtained by coupling a plurality of apparatuses and/or modules together. A "module" is a work cell, typically smaller in size than the entire clinical diagnostics system, which has a dedicated function. This function can be analytical but can be also pre-analytical or post analytical or it can be an auxiliary function to any of the pre-analytical function, analytical function or post-analytical function. In particular, a module can be configured to cooperate with one or more other modules for carrying out dedicated tasks of a sample processing workflow, e.g. by performing one or more pre-analytical and/or analytical and/or post-analytical steps. In particular, the clinical diagnostics system can comprise one or more analytical apparatuses, designed to execute respective workflows that are optimized for certain types of analysis, e.g. clinical chemistry, immunochemistry, coagulation, hematology, liquid chromatography separation, mass spectrometry, etc. Thus the clinical diagnostic system may comprise one analytical apparatus or a combination of any of such analytical apparatuses with respective workflows, where pre-analytical and/or post analytical modules may be coupled to individual analytical apparatuses or be shared by a plurality of analytical apparatuses. In alternative pre-analytical and/or post-analytical functions may be performed by units integrated in an analytical apparatus. The clinical diagnostics system can comprise functional units such as liquid handling units for pipetting and/or pumping and/or mixing of samples and/or reagents and/or system fluids, and also functional units for sorting, storing, transporting, identifying, separating, detecting.

The term "sample" as used herein refers to a biological material suspected of containing one or more analytes of interest and whose detection, qualitative and/or quantitative, may be associated to a clinical condition. The sample can be derived from any biological source, such as a physiological fluid, including, blood, saliva, ocular lens fluid, cerebral spinal fluid, sweat, urine, milk, ascites fluid, mucous, synovial fluid, peritoneal fluid, amniotic fluid, tissue, cells or the like. The sample can be pretreated prior to use, such as preparing plasma from blood, diluting viscous fluids, lysis or the like; methods of treatment can involve filtration, centrifugation, distillation, concentration, inactivation of interfering components, and the addition of reagents. A sample may be used directly as obtained from the source in some cases or following a pretreatment and/or sample preparation workflow to modify the character of the sample, e.g. after adding an internal standard, after being diluted with another solution or after having being mixed with reagents e.g. to enable carrying out one or more in vitro diagnostic tests, or for enriching (extracting/separating/concentrating) analytes of interest and/or for removing matrix components potentially interfering with the detection of the analyte(s) of interest. The term "sample" is tendentially used to indicate a sample before sample preparation whereas the term "prepared sample" is used to refer to samples after sample preparation. In non-specified cases the term "sample" may generally indicate either a sample before sample preparation or a sample after sample preparation or both. Examples of analytes of interest are vitamin D, drugs of abuse, therapeutic drugs, hormones, and metabolites in general. The list is however not exhaustive.

The term "liquid chromatograph" as used herein refers to an apparatus configured to be used for liquid chromatography (LC). LC is a separation technique in which the mobile phase is a liquid. It can be carried out either in a column or a plane. Present day liquid chromatography that generally utilizes very small packing particles and a relatively high pressure is referred to as high performance liquid chromatography (HPLC). In HPLC the sample is forced by a liquid at high pressure (the mobile phase) through a column that is packed with a stationary phase composed of irregularly or spherically shaped particles, a porous monolithic layer, or a porous membrane. HPLC is historically divided into two different sub-classes based on the polarity of the mobile and stationary phases. Methods in which the stationary phase is more polar than the mobile phase (e.g., toluene as the mobile phase, silica as the stationary phase) are termed normal phase liquid chromatography (NPLC) and the opposite (e.g., water-methanol mixture as the mobile phase and C18 = octadecylsilyl as the stationary phase) is termed reversed phase liquid chromatography (RPLC).

The term "mass spectrometer" as used herein refers to an apparatus configured to be used for mass spectrometry (MS). MS is an analytical technique that ionizes chemical species and sorts the ions based on their mass to charge ratio. In simpler terms, a mass spectrum measures the masses within a sample. Mass spectrometry is used in many different fields and is applied to pure samples as well as complex mixtures. A mass spectrum is a plot of the ion signal as a function of the mass-to-charge ratio. These spectra are used to determine the elemental or isotopic signature of a sample, the masses of particles and of molecules, and to elucidate the chemical structures of molecules, such as peptides and other chemical compounds. In a typical MS procedure, a sample, which may be solid, liquid, or gas, is ionized, for example by bombarding it with electrons. This may cause some of the sample's molecules to break into charged fragments. These ions are then separated according to their mass-to-charge ratio, typically by accelerating them and subjecting them to an electric or magnetic field: ions of the same mass-to-charge ratio will undergo the same amount of deflection. The ions are detected by a mechanism capable of detecting charged particles, such as an electron multiplier. Results are displayed as spectra of the relative abundance of detected ions as a function of the mass-to-charge ratio. The atoms or molecules in the sample can be identified by correlating known masses to the identified masses or through a characteristic fragmentation pattern.

The term "composition of different chemical substances" as used herein refers to a mixture of chemical substances being different from one another. Basic requirement is that the used chemical substances show almost identical behavior during the sample processing and chromatography than the analytes of interest as they have to follow the same workflow as the analytes. This could be achieved by using chemical isotopes or substances with similar polarity as the analytes.

With the disclosed method, a possibility for chemical coding is provided. The possibility of chemical coding is a special feature which is made possible by the high multiplexing capabilities of mass spectrometric detection, which enables the detection of additional signals at any time during the measurement. A combination of several markers (present/not present; high/low concentration etc.) would allow unambiguously labeling of all samples which are on the system.

The composition of different chemical substances may be added to the sample before, during or after preparing the sample.

For this reason, the analysis system may comprise a sample preparation station for the automated preparation of samples. A "sample preparation station" is a pre-analytical module coupled to one or more analytical apparatuses or a unit in an analytical apparatus designed to execute a series of sample processing steps aimed at removing or at least reducing interfering matrix components in a sample and/or enriching analytes of interest in a sample. Such processing steps may include any one or more of the following processing operations carried out on a sample or a plurality of samples, sequentially, in parallel or in a staggered manner: pipetting (aspirating and/or dispensing) fluids, pumping fluids, mixing with reagents, incubating at a certain temperature, heating or cooling, centrifuging, separating, filtering, sieving, drying, washing, resuspending, aliquoting, transferring, storing and the like.

A "reagent" is a substance used for treatment of a sample in order e.g. to prepare a sample for analysis, to enable a reaction to occur, or to enable detection of a physical parameter of the sample or analyte contained in the sample. In particular, a reagent can be a substance that is or comprises a reactant, typically a compound or agent capable e.g. of binding to or chemically transforming one or more analytes present in a sample or an unwanted matrix component of the sample. Examples of reactants are enzymes, enzyme substrates, conjugated dyes, protein-binding molecules, ligands, nucleic acid binding molecules, antibodies, chelating agents, promoters, inhibitors, epitopes, antigens, and the like. However the term reagent is used to include any fluid that can be added to a sample including a dilution liquid, including water or other solvent or a buffer solution, or a substance that is used for disruption of specific or nonspecific binding of an analyte to a protein, binding proteins or surfaces. A sample may be provided for example in sample containers such as sample tubes, including primary tubes and secondary tubes, or multi-well plates, or any other sample carrying support. Reagents may be arranged for example in the form of containers or cassettes containing individual reagents or group of reagents and placed in appropriate receptacles or positions within a storage compartment or conveyor. Other types of reagents or system fluids may be provided in bulk containers or via a line supply.

For sample tracking a combination of coding substances is added to the sample early in the sample preparation process, ideally directly after dispensing an aliquot of the sample (aliquot of patient sample) into the first sample processing vial.

The chemical substances may be configured to prevent retaining thereof on a stationary phase of the liquid chromatograph. Thus, it is ensured that the chemical substances follow the sample throughout the workflow such that sample identity is unambiguously detectable and the mass spectrometer will not detect the chemical substances during normal applications.

For example, the polarity and the molecular weight of the chemical substances are adapted to the stationary phase of the liquid chromatograph such that the chemical substances are prevented from being retained on the stationary phase of the liquid chromatograph.

The polarity of the chemical substances may be adapted by means of using a mixture of isobaric oligomers or isotopes of the chemical substances. Thus, the used chemical substances show almost identical behavior during the sample processing and chromatography as the analytes of interest. Thereby, identity of the samples may be unambiguously detected.

The molecular weight may be adapted by using homologs, derivatives or isotope labelling of the chemical substances. Thus, the molecular weight may be adapted in a rather simple manner.

The polarity of the chemical substances may be adapted by means of using a mixture of oligomers or derivatives of the chemical substances. Thus, the polarity may be adapted in a rather simple manner.

Each oligomer component may have a labeling group for molecular weight coding which is measured intact or released during a mass spectrometric process and measured by means of the mass spectrometer. In the first alternative, the labeling group remains intact at a backbone und the total mass is detected, which is possible if the backbone mass of each single component is isobaric. In the latter alternative, the labeling group is released or separated, for example within the ion source or a collision cell of the mass spectrometer and the mass thereof is detected. In this alternative, the mass of the backbone does not have to be isobaric.

The sample comprises at least one analyte of interest, wherein the chemical substances are chemical isotopes and/or have similar polarity as the analyte of interest. Thus, the chemical substances show almost identical behavior during the sample processing and chromatography as the analyte of interest. Thus, the identity of the analyte may be unambiguously tracked.

The chemical substances may comprise polar molecule groups and lipophilic molecule groups. Thus, the polarity may be individually adapted to the analyte of interest.

The chemical substances may be formed from monomeric blocks having a structure of (polar)ₙ-(lipophil)ₘ, wherein (polar) represents a polar molecule group, (lipophil) represents a lipophilic molecule group and n, m are integers greater 0. Thus, the monomers may be designed to have identical molecular weight (isobaric building blocks), whereby the overall molecular weight of this oligomeric subunit is constant independently of the ratio n/m generating an isobaric oligomer backbone.

For example, the chemical substances are formed from monomeric building blocks n*(polar) and m*(lipophil) which are polymerized randomly, wherein (polar) represents a polar molecule group, (lipophil) represents a lipophilic molecule group and n, m are integers greater 0. Thus, the sequence distribution of n and m may be random or not random depending on the desired readout of the mass spectrometer, molecular weight only by using selected ion monitoring or by readout of molecular weight and sequence by fragmentation pattern (daughter ion scan).

The liquid chromatograph comprises a liquid chromatography separation station comprising a plurality of liquid chromatography channels. The method further comprises providing a plurality of samples, adding a composition of different chemical substances to each of the plurality of samples, wherein the compositions added to the plurality of samples are different from one another, processing the plurality of samples together with the compositions of chemical substances by means of the analysis system, and identifying each of the plurality of samples based on a detection of substance detection signal patterns of the mass spectrometer including substance detection signals representing the different compositions of chemical substances.

The term "liquid chromatograph separation station" as used herein refers to an analytical apparatus or module or a unit in an analytical apparatus designed to subject the prepared samples to chromatographic separation in order for example to separate analytes of interest from matrix components, e.g. remaining matrix components after sample preparation that may still interfere with a subsequent detection, e.g. a mass spectrometry detection, and/or in order to separate analytes of interest from each other in order to enable their individual detection. According to an embodiment, the liquid chromatograph separation station is an intermediate analytical apparatus or module or a unit in an analytical apparatus designed to prepare a sample for mass spectrometry and/or to transfer the prepared sample to a mass spectrometer. In particular, the liquid chromatograph separation station is a multi-channel liquid chromatograph separation station comprising a plurality of liquid chromatography channels.

A "liquid chromatography channel" is a fluidic line comprising at least one capillary tubing and/or liquid chromatography column comprising a stationary phase selected according to the type of sample(s) and analytes and through which a mobile phase is pumped in order to trap and/or separate and elute and/or transfer analytes of interest under selected conditions, e.g. according to their polarity or log P value, size or affinity, as generally known. The at least one liquid chromatography column in the at least one liquid chromatography channel may be exchangeable. In particular, the liquid chromatography may comprise more liquid chromatography columns than liquid chromatography channels, where a plurality of liquid chromatography columns may be interchangeably coupled to the same liquid chromatography channel. A capillary tubing may bypass an liquid chromatography column or may allow adjustment of dead volumes to fine-tune elution time windows.

The liquid chromatography separation station typically further comprises also a sufficient number of pumps, e.g. binary pumps in case of conditions requiring the use of elution gradients, and several switching valves.

The number of compositions may correspond to the number of liquid chromatography channels. Thus, for each channel, a chemical coding is provided which allows to unambiguously track the sample throughout the process.

The chemical substances may have an identical the molecular weight. Thus, an almost identical behavior as the analyte of interest within the mass spectrometer is ensured.

The chemical substance may be at least one element selected from the group consisting of: peptides, derivatives of peptides, peptide nucleic acids, oligonucleotides, and oligomers. Thus, substances which may be well handled may be used.

Each chemical substance may comprise an isobaric oligomer group and at least one molecular weight coding group, wherein the isobaric oligomer group and a molecular weight coding group of the different chemical substances differ from one another. Function of the Thus, it is possible to enable the generation of a variety of encoding substances with different molecular weight. This is generated for example by using different amounts of stable isotopic labels or different chemical functionality within the molecular weight code. Function of the oligomeric building block is to generate a polarity leader in which the subunits have different chromatographic properties (logP) but have identically molecular weights. Thus by the combination of molecular weight code" and isobaric oligomer backbone, it is possible to generate a chemical coding-entity.

The invention further discloses and proposes a computer program including computer-executable instructions for performing the method according to the present invention in one or more of the embodiments enclosed herein when the program is executed on a computer or computer network. This is however not claimed.

Specifically, the computer program may be stored on a computer-readable data carrier. Thus, specifically, one, more than one or even all of the method steps as indicated above may be performed by using a computer or a computer network, preferably by using a computer script.

The invention further discloses and proposes a computer program product having program code means, in order to perform the method according to the present invention in one or more of the embodiments enclosed herein when the program is executed on a computer or computer network. This is however not claimed.

Specifically, the program code means may be stored on a computer-readable data carrier.

Further, the invention discloses and proposes a data carrier having a data structure stored thereon, which, after loading into a computer or computer network, such as into a working memory or main memory of the computer or computer network, may execute the method according to one or more of the embodiments disclosed herein. This is however not claimed.

The invention further proposes and discloses a computer program product with program code means stored on a machine-readable carrier, in order to perform the method according to one or more of the embodiments disclosed herein, when the program is executed on a computer or computer network. This is however not claimed.

As used herein, a computer program product refers to the program as a tradable product. The product may generally exist in an arbitrary format, such as in a paper format, or on a computer-readable data carrier. Specifically, the computer program product may be distributed over a data network.

Finally, the invention proposes and discloses a modulated data signal which contains instructions readable by a computer system or computer network, for performing the method according to one or more of the embodiments disclosed herein. This is however not claimed.

Preferably, referring to the computer-implemented aspects, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, the following is further disclosed:
- A computer or computer network comprising at least one processor, wherein the processor is adapted to perform the method according to one of the embodiments described in this description,
- a computer loadable data structure that is adapted to perform the method according to one of the embodiments described in this description while the data structure is being executed on a computer,
- a computer script, wherein the computer program is adapted to perform the method according to one of the embodiments described in this description while the program is being executed on a computer,
- a computer program comprising program means for performing the method according to one of the embodiments described in this description while the computer program is being executed on a computer or on a computer network,
- a computer program comprising program means according to the preceding embodiment, wherein the program means are stored on a storage medium readable to a computer,
- a storage medium, wherein a data structure is stored on the storage medium and wherein the data structure is adapted to perform the method according to one of the embodiments described in this description after having been loaded into a main and/or working storage of a computer or of a computer network, and
- a computer program product having program code means, wherein the program code means can be stored or are stored on a storage medium, for performing the method according to one of the embodiments described in this description, if the program code means are executed on a computer or on a computer network.

### SHORT DESCRIPTION OF THE FIGURES

Further features and embodiments of the invention will be disclosed in more detail in the subsequent description, particularly in conjunction with the dependent claims. Therein the respective features may be realized in an isolated fashion as well as in any arbitrary feasible combination, as a skilled person will realize, as long as they are within the scope of the invention as defined by the appended claims.

The embodiments are schematically depicted in the figures. Therein, identical reference numbers in these figures refer to identical elements or functionally identical elements.

In the figures:
Figure 1 shows a schematic representation of an analysis system and a method for tracking a sample identity during a process in an analysis system,
Figure 2 shows schematically the construction a chemical substance,
Figure 3 shows the result of a chromatographic separation of the four examples from the generic type n*(polar) and m*(lipophil) analyzed by HPLC-PDA, and
Figure 4 shows an on-line mass spectrometer scan of the four examples from the generic type n*(polar) and m*(lipophil) analyzed by Q-Tof Mass spectrometry.

### DETAILED DESCRIPTION

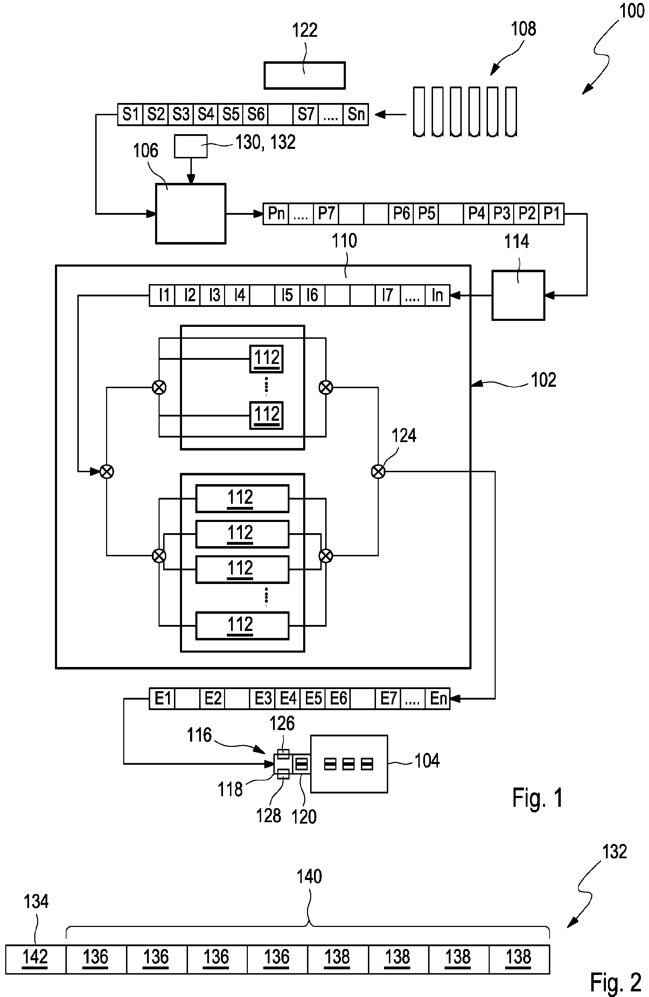

Figure 1 shows a schematic representation of an analysis system 100 and a method for tracking a sample identity during a process in an analysis system 100. With reference to Figure 1, an example of an analysis system 100 is described. The analysis system 100 may be a clinical diagnostic system. The analysis system 100 comprises at least a liquid chromatograph 102 and a mass spectrometer 104. In the present embodiment, the analysis system 100 further comprises a sample preparation station 106 for the automated pretreatment and preparation of samples 108 each comprising at least one analyte of interest.

The liquid chromatograph 102 comprises a liquid chromatography separation station 110 comprising a plurality of liquid chromatography channels 112. The liquid chromatography channels 112 may differ from one another in that there are liquid chromatography channels 112 with a shorter cycle time and liquid chromatography channels 112 with a longer cycle time. However, the liquid chromatography separation station 110 may comprise a plurality of only faster liquid chromatography channels 112, or a plurality of only slower liquid chromatography channels 112. The analysis system 100 further comprises a sample preparation/liquid chromatography interface 114 for inputting prepared samples into any one of the liquid chromatography channels 112.

The analysis system 100 further comprises a liquid chromatography/mass spectrometer interface 116 for connecting the liquid chromatography separation station 110 to the mass spectrometer 104. The liquid chromatography/mass spectrometer interface 116 comprises an ionization source 118 and an ion mobility module 120 between the ionization source 118 and the mass spectrometer 104. The ion mobility module 120 may be a high-field asymmetric waveform ion mobility spectrometry (FAIMS) module. The mass spectrometer 104 is a tandem mass spectrometer and in particular a triple quadrupole mass spectrometer, capable of multiple reaction monitoring (MRM).

The analysis system 100 further comprises a controller 122 programmed to assign the samples 108 to pre-defined sample preparation workflows each comprising a pre-defined sequence of sample preparation steps and requiring a pre-defined time for completion depending on the analytes of interest. The controller 122 is further programmed to assign (reserve in advance) an liquid chromatography channel 112 for each prepared sample depending on the analytes of interest and to plan an liquid chromatography channel input sequence I1-n for inputting the prepared samples that allows analytes of interest from different liquid chromatography channels 112 to elute in a non-overlapping LC eluate output sequence E1-n based on expected elution times. The controller 122 is further programmed to set and initiate a sample preparation start sequence S1-n that generates a prepared sample output sequence P1-n that matches the liquid chromatography channel input sequence I1-n.

In Figure 1, each sample of the sample preparation start sequence S1-n, each prepared sample of the prepared sample output sequence P1-n and liquid chromatography channel input sequence I1-n, each liquid chromatography eluate of the liquid chromatography eluate output sequence E1-n is indicated in a segment of a sequence comprising non-overlapping adjacent segments, each segment representing schematically one reference period. Each sequence is thus a sequence of reference periods or time units, the length of which can be fixed and remains constant across the different sequences.

Preparation of new samples in the sample preparation start sequence S1-n is started with a frequency of one sample per reference period or at intervals separated by one or more reference periods, indicated by empty segments in the sequence, in which no sample preparation is started.

Also, preparation of samples in the prepared sample output sequence P1-n is completed with a frequency of one prepared sample per reference period or at intervals separated by one or more reference periods, indicated by empty segments in the sequence, in which no sample preparation is completed.

Also, the prepared samples are inputted in the respective assigned liquid chromatography channels 112 according to the liquid chromatography channel input sequence I1-n with a frequency of one liquid chromatography channel input per reference period or at intervals separated by one or more reference periods, indicated by empty segments in the sequence, in which no liquid chromatography channel input takes place.

Also, the liquid chromatography eluates in the liquid chromatography eluate output sequence E1-n are outputted with a frequency of one liquid chromatography eluate per reference period or at intervals separated by one or more reference periods, indicated by empty segments in the sequence, in which no liquid chromatography eluate is outputted.

The liquid chromatography channels 112 are alternately connectable to the liquid chromatography/mass spectrometer interface 116 and the controller 122 controls a valve switching 124 according to the liquid chromatography eluate output sequence E1-n for inputting one liquid chromatography eluate at a time into the ionization source 118. In particular, the liquid chromatography eluates in the liquid chromatography eluate output sequence E1-n are inputted into the ionization source 118 with a frequency of one liquid chromatography eluate per reference period or at intervals separated by one or more reference periods according to the liquid chromatography eluate output sequence E1-n.

The ionization source 118 is a double ionization source, including an ESI source 126 and an APCI source 128, where depending on the liquid chromatography eluate in the liquid chromatography eluate output sequence E1-n and on the analyte(s) of interest contained therein the controller 122 may select one of the two ionization sources 126, 128 that is most appropriate. When setting the sample preparation start sequence S1-n, the controller 122 may group together (place adjacent to each other in the sequence) samples also according to the ionization source 126, 128 so that frequent switch between ionization sources 126, 128 is prevented. Ionization source switching may be planned during one or more empty reference periods for example.

With continued reference to Figure 1, a method for tracking a sample identity during a process in the analysis system 112 is described. The method comprises providing a sample 108. A composition 130 of different chemical substances 132 is added to the sample 108 with a concentration being above a detection level of the mass spectrometer 104. The composition 130 of different chemical substances 132 may be added to the sample 108 before, during or after preparing the sample 108. In any case, the composition 130 of different chemical substances 132 is added to the sample 108 before the sample 108 is input into the liquid chromatograph 102. In the present embodiment, the composition 130 of different chemical substances 132 is added to the sample 108 during the preparing the sample 108. That is, composition 130 of different chemical substances 132 is added to the sample 108 at the sample preparation station 106.

Then, the sample 108 is processed together with the composition 130 by means of the analysis system 100. With other words, the thus prepared sample 108 together with the composition is input into the liquid chromatograph 102, passes through the liquid chromatograph 102 and is input into the mass spectrometer 104. By means of the mass spectrometer a component and/or components of the sample 108 is detected and measured. In addition, the composition 130 or parts of the composition 130 of different chemical substances 132 is detected and measured by the mass spectrometer 104. The sample 108 is identified based on a detection of a substance detection signal pattern of the mass spectrometer 104 including substance detection signals representing the composition 130 of different chemical substances 132. With other words, the signal of the mass spectrometer 104 not only includes the detection result corresponding to the sample 108 but also includes signals unique to the different chemical substances 132, thereby allowing to unambiguously identify the sample 108.

Hereinafter, specific details of the chemical substances 132 will be described. Basically, the sample comprises at least one analyte of interest and the chemical substances 132 are chemical isotopes and/or have similar polarity as the analyte of interest in order to ensure that the used chemicals show almost identical behavior during the sample processing and chromatography than the analyte of interest as they have to follow the same workflow as the analyte. The chemical substances 132 have an identical the molecular weight. The chemical substance 132 is at least one element selected from the group consisting of: peptides, derivatives of peptides, peptide nucleic acids, oligonucleotides, and oligomers Further, the chemical substances are configured to prevent retaining thereof on a stationary phase of the liquid chromatograph 102. This may be realized in that the polarity and the molecular weight of the chemical substances 132 are adapted to the stationary phase of the liquid chromatograph 102 such that the chemical substances 132 are prevented from being retained on the stationary phase of the liquid chromatograph 102. For example, the polarity of the chemical substances 132 is adapted by means of using a mixture of isobaric oligomers or isotopes of the chemical substances 132 and the molecular weight is adapted by using homologs, derivatives or isotope labelling of the chemical substances 132. More particularly, the polarity of the chemical substances 132 is adapted by means of using a mixture of oligomers or derivatives of the chemical substances 132. Each oligomer component has a labeling group 134 for molecular weight coding which is measured intact or released during a mass spectrometric process and measured by means of the mass spectrometer 104 as will be described in further detail below.

Figure 2 shows schematically the construction of one of the chemical substances 132. The chemical substances 132 comprise polar molecule groups 136 and lipophilic molecule groups 138. The chemical substances 132 are formed from monomeric blocks having a structure of (polar)ₙ-(lipophil)ₘ, wherein (polar) represents a polar molecule group 136, (lipophil) represents a lipophilic molecule group 138 and n, m are integers greater 0. More particularly, the chemical substances are formed from monomeric building blocks n*(polar) and m*(lipophil) which are polymerized randomly, wherein (polar) represents a polar molecule group 136, (lipophil) represents a lipophilic molecule group 138 and n, m are integers greater 0. In the example shown in Figure 2, the chemical substance 132 comprises four polar molecule groups 136 followed by four lipophilic molecule groups 138. Thus, each chemical substance 132 comprises an isobaric oligomer group 140 and at least one molecular weight coding group 142, wherein the isobaric oligomer group 140 and the molecular weight coding group 142 of the different chemical substances 132 differ from one another.

The chemical substances 132 may thus be used for chemical coding of the samples. The number of target analytes is highly depending of the application menu on the analysis system 100. A prerequisite to the coding chemicals is therefore to cover the whole polarity range of the application menu. This is achieved by a composition of a complex functional entity of coding chemicals as described above. The monomers are designed to have identical molecular weight (isobaric building blocks), thus the overall molecular weight of this oligomeric subunit is constant independently of the ratio n/m generating an isobaric oligomer backbone. The sequence distribution of n and m may be random or not random depending on the desired readout of the mass spectrometer 104, molecular weight only by using selected ion monitoring or by readout of molecular weight and sequence by fragmentation pattern (daughter ion scan). Attached to this building block there is a molecular weight discriminating label. Function of the molecular weight coding group 142 is to enable the generation of a variety of encoding substances with different molecular weight. This is generated for example by using different amounts of stable isotopic labels or different chemical functionality within the molecular weight coding group 142. Function of the oligomeric building block is to generate a polarity leader in which the subunits have different chromatographic properties (logP) but have identically molecular weights. Thus, by the combination of the molecular weight coding group 142 and the isobaric oligomer backbone it is possible to generate a chemical coding-entity. Examples for monomers used for generation of the isobaric oligomer backbone are serin-propylether having a molecular weight of 129.16, homoserin-ethylether having a molecular weigh of 129.16 and glutamine acid having a molecular weigh of 129.11.

Thus, finally each molecular weight coding group 142 is linked to a mixture of an isobaric oligomer backbone which covers the whole chromatographic space of the application. Thus, independently of the polarity (logP) of the analytes of interest at least on member of each chemical coding entity or chemical substance 132 will be detected by the mass spectrometer 104 in the same time window as the analyte of interest. For example, by using 7 different molecular weight coding group 142 attached to the same isobaric oligomer backbone it is possible to generate a matrix of 107 different chemical codes. In this case, the only differentiation criterion is the molecular weight (SIM readout only).

As described above, the liquid chromatography separation station 110 comprises a plurality of liquid chromatography channels 112. Thus, a plurality of samples 108 may be processed at the same time. Thus, the method may further comprise providing a plurality of samples 108, adding a composition 130 of different chemical substances 132 to each of the plurality of samples 108, wherein the compositions 130 added to the plurality of samples 108 are different from one another, processing the plurality of samples 108 together with the compositions 130 of chemical substances 132 by means of the analysis system 100, and identifying each of the plurality of samples 108 based on a detection of substance detection signal patterns of the mass spectrometer 104 including substance detection signals representing the different compositions 130 of chemical substances 132. In this case, the number of compositions 130 may correspond to the number of liquid chromatography channels 112.

Hereinafter, a detailed example for the disclosed method is given.

Four different examples 1 to 4 of the general type of chemicals n*(polar) and m*(lipophil) were synthetized. The following chemical substances 132 have been chosen which have the same molecular mass (±1Da). The chemicals, which are sorted in descending order of polarity (logP) with the hydrophobic first, are the following: **Hse**Hse**Hse*L*Hse**Hse**Hse**-OH* ; *Hse**Hse*LE*Hse**Hse**-OH* ; **Hse**Hse*ELE*Hse**Hse**-OH* ; **Hse*E*Hse*ELE*Hse**-OH*. The respective abbreviations are Hse = homoserine ethyl ether, L = leucine, LE = leucine-glutamic acid, ELE = glutamic acid-leucine-glutamic acid, E = glutamic acid.

As expected outcome of this experiment, a difference in retention time on a chromatographic system should occur due to the differences in polarity while the molecular mass should be the same for all different chemical substances (± 1Da).

### Experimental procedure:

The substances have been individually prepared by weighing in 0,5mg of the respective substance and diluted with 1ml of Water containing 10 % (v/v) acetic acid. The so prepared samples have been injected to an HPLC system (Waters Aquity) which was equipped with an Vydac 218TP C18 column (5µm, 2,1x150mm). The pump was maintained in gradient mode with the following solvents.
Solvent A: Water + 2% Acetonitrile + 0,1% formic acid (v/v)
Solvent B: Acetonitrile + 0,1% formic acid (v/v)

The following gradient was applied:
0min (98%A), 15min (35%A), 17min (0%A), 25min (0%A), 25.1min (98%A), 30min (98%A).

The samples were analyzed by the online coupling of the HPLC with an Waters Aquity PDA Detector (190nm-450nm) and a Waters Q-Tof Premier Mass spectrometer in positive electrospray ionization ion mode (Scan 90-1500Da, 30V Cone voltage, 5V collision energy, 120°C source temperature and 300°C desolvation temperature). The scan rate was 2Hz for the mass spectrometer and 10Hz for the PDA detector.

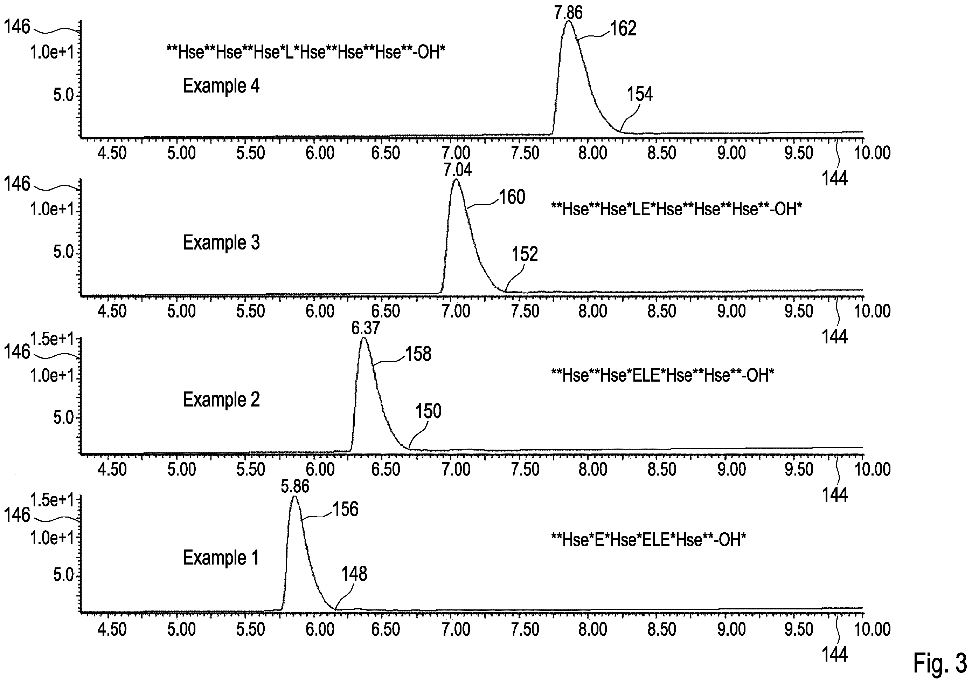

Figure 3 shows the result of a chromatographic separation of the four examples from the generic type n*(polar) and m*(lipophil) analyzed by HPLC-PDA. The x-axes 144 respectively indicate the retention time and the y-axes 146 respectively indicate the respective retention signals. The graphs 148, 150, 152, 154 represent the results of the chromatographic separation of the four examples 1 to 4 in this order, wherein the result for example 1 is given at the bottom and the result of example 4 is given at the top with examples 2 and 3 therebetween from the bottom to the top.

As expected, the four different samples consisting of **Hse**Hse**Hse*L*Hse**Hse**Hse**-OH* ; *Hse**Hse*LE*Hse**Hse**-OH* ; **Hse**Hse*ELE*Hse**Hse**-OH* ; **Hse*E*Hse*ELE*Hse**-OH* elute on the above described revers phase chromatographic system on different retention times, therefore expose different polarities, i.e. different logP, as can be taken from the respective signal peaks 156, 158, 160, 162 at different points of time for examples 1 to 4 in this order. Particularly, example 1 indicated by graph 148 has the smallest retention time followed by example 2 indicated by graph 150 which in turn is followed by example 3 indicated by graph 152. Example 4 indicated by graph 154 has the biggest retention time.

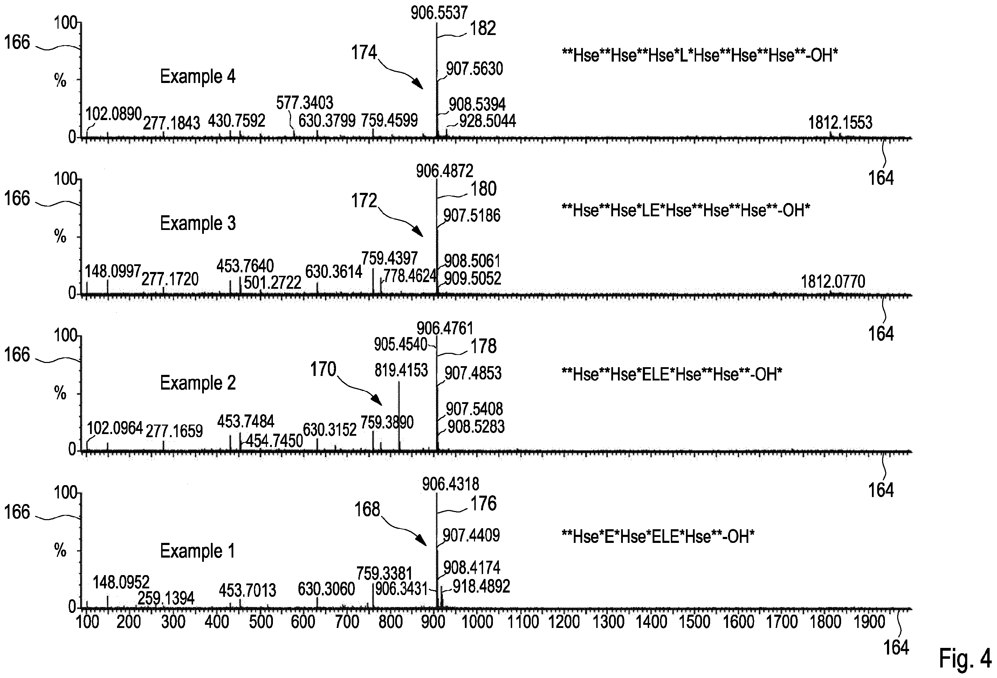

Figure 4 shows an on-line mass spectrometer scan of the four examples 1 to 4 from the generic type n*(polar) and m*(lipophil) analyzed by Q-Tof Mass spectrometry. The x-axes 164 respectively indicate molecular mass and the y-axes 166 respectively indicate the molecular mass percentage of the samples. The graphs 168, 170, 172, 174 represent the results of the molecular mass distribution of the four examples 1 to 4 in this order, wherein the result for example 1 is given at the bottom and the result of example 4 is given at the top with examples 2 and 3 therebetween from the bottom to the top.

As expected the four different samples consisting of **Hse**Hse**Hse*L*Hse**Hse**Hse**-OH* ; *Hse**Hse*LE*Hse**Hse**-OH* ; **Hse**Hse*ELE*Hse**Hse**-OH* ; **Hse*E*Hse*ELE*Hse**-OH* express the same molecular weight of the pseudo molecular ion [M+H]+ at 906 Da (±1Da) as can be taken from the respective signal peaks 176, 178, 180, 182 for examples 1 to 4 in this order having identical heights.

### List of reference numbers

- 100: analysis system
- 102: liquid chromatograph
- 104: mass spectrometer
- 106: sample preparation station
- 108: sample
- 110: liquid chromatography separation station
- 112: liquid chromatography channel
- 114: sample preparation/liquid chromatography interface
- 116: liquid chromatography/mass spectrometer interface
- 118: ionization source
- 120: ion mobility module
- 122: controller
- 124: valve switching
- 126: ESI source
- 128: APCI source
- 130: composition
- 132: chemical substance
- 134: labeling group
- 136: polar molecule groups
- 138: lipophilic molecule group
- 140: isobaric oligomer group
- 142: molecular weight coding group
- 144: time
- 146: retention signal
- 148: result of the chromatographic separation for example 1
- 150: result of the chromatographic separation for example 2
- 152: result of the chromatographic separation for example 3
- 154: result of the chromatographic separation for example 4
- 156: signal peak for example 1
- 158: signal peak for example 2
- 160: signal peak for example 3
- 162: signal peak for example 4
- 164: molecular mass
- 166: molecular mass percentage
- 168: molecular mass distribution for example 1
- 170: molecular mass distribution for example 2
- 172: molecular mass distribution for example 3
- 174: molecular mass distribution for example 4
- 176: signal peak for example 1
- 178: signal peak for example 2
- 180: signal peak for example 3
- 182: signal peak for example 4

## Claims

1. Method for tracking a sample identity during a process in an analysis system (112), wherein the analysis system (112) comprises a liquid chromatograph (102) and a mass spectrometer (104), the method comprising:
- providing a sample (108),
- adding a composition (130) of different chemical substances (132) to the sample (108) with a concentration being above a detection level of the mass spectrometer (104),
- processing the sample (108) together with the composition (130) by means of the analysis system (112),
- detecting and measuring a component and/or components of the sample (108) by means of the mass spectrometer (104),
- detecting and measuring the composition (130) or parts of the composition (130) of different chemical substances (132) by means of the mass spectrometer (104)
- identifying the sample (108) based on a detection of a substance detection signal pattern of the mass spectrometer (104) including substance detection signals representing the composition (130) of chemical substances (132), wherein the liquid chromatograph (102) comprises a liquid chromatography separation station (110) comprising a plurality of liquid chromatography channels (112), wherein the method further comprises providing a plurality of samples (108), adding a composition (130) of different chemical substances (132) to each of the plurality of samples (108), wherein the compositions (130) added to the plurality of samples (108) are different from one another, processing the plurality of samples (108) together with the compositions (130) of chemical substances (132) by means of the analysis system (112), and identifying each of the plurality of samples (108) based on a detection of substance detection signal patterns of the mass spectrometer (104) including substance detection signals representing the different compositions (130) of chemical substances (132).

2. Method according to claim 1, wherein the composition (130) of different chemical substances (132) is added to the sample (108) before, during or after preparing the sample (108).

3. Method according to claim 1 or 2, wherein the chemical substances (132) are configured to prevent retaining thereof on a stationary phase of the liquid chromatograph (102).

4. Method according to claim 3, wherein the polarity and the molecular weight of the chemical substances (132) are adapted to the stationary phase of the liquid chromatograph (102) such that the chemical substances (132) are prevented from being retained on the stationary phase of the liquid chromatograph (102).

5. Method according to claim 4, wherein the polarity of the chemical substances (132) is adapted by means of using a mixture of isobaric oligomers or isotopes of the chemical substances (132).

6. Method according to claim 3 or 4, wherein the molecular weight is adapted by using homologs, derivatives or isotope labelling of the chemical substances (132).

7. Method according to claim 4, wherein the polarity of the chemical substances (132) is adapted by means of using a mixture of oligomers or derivatives of the chemical substances (132).

8. Method according to claim 7, wherein each oligomer component has a labeling group (134) for molecular weight coding which is measured intact or released during a mass spectrometric process and measured by means of the mass spectrometer (104).

9. Method according to any one of claims 1 to 8, wherein the sample (108) comprises at least one analyte of interest, wherein the chemical substances (132) are chemical isotopes and/or have similar polarity as the analyte of interest.

10. Method according to any one of claims 1 to 9, wherein the chemical substances (132) comprise polar molecule groups (136) and lipophilic molecule groups (138).

11. Method according to claim 10, wherein the chemical substances (132) are formed from monomeric blocks having a structure of (polar)ₙ-(lipophilic)ₘ, wherein (polar) represents a polar molecule group (136), (lipophilic) represents a lipophilic molecule group (140) and n, m are integers greater 0.

12. Method according to claim 10, wherein the chemical substances (132) are formed from monomeric building blocks n*(polar) and m*(lipophilic) which are polymerized randomly, wherein (polar) represents a polar molecule group (136), (lipophilic) represents a lipophilic molecule group (138) and n, m are integers greater 0.

13. Method according to any one of claims 1 to 12, wherein the number of compositions (130) corresponds to the number of liquid chromatography channels (112).

14. Method according to any one of claims 1 to 13, wherein each chemical substance (132) comprises an isobaric oligomer group (140) and at least one molecular weight coding group (142), wherein the isobaric oligomer group (140) and the molecular weight coding group (142) of the different chemical substances (132) differ from one another.

## Patentansprüche

1. Verfahren zum Verfolgen einer Probenidentität während eines Prozesses in einem Analysesystem (112), wobei das Analysesystem (112) einen Flüssigchromatographen (102) und ein Massenspektrometer (104) umfasst, wobei das Verfahren Folgenden umfasst:
- Bereitstellen einer Probe (108),
- Zugeben einer Zusammensetzung (130) aus verschiedenen chemischen Substanzen (132) zu der Probe (108), wobei eine Konzentration über einem Nachweisniveau des Massenspektrometers (104) liegt,
- Verarbeiten der Probe (108) zusammen mit der Zusammensetzung (130) mittels des Analysesystems (112),
- Nachweisen und Messen einer Komponente und/oder von Komponenten der Probe (108) mittels des Massenspektrometers (104),
- Nachweisen und Messen der Zusammensetzung (130) oder von Teilen der Zusammensetzung (130) aus verschiedenen chemischen Substanzen (132) mittels des Massenspektrometers (104),
- Identifizieren der Probe (108) basierend auf einem Nachweis eines Substanznachweissignalmusters des Massenspektrometers (104), das Substanznachweissignale einschließt, die die Zusammensetzung (130) aus chemischen Substanzen (132) darstellen, wobei der Flüssigchromatograph (102) eine Flüssigchromatographietrennstation (110) umfasst, die eine Vielzahl von Flüssigchromatographiekanälen (112) umfasst, wobei das Verfahren ferner das Bereitstellen einer Vielzahl von Proben (108), das Zugeben einer Zusammensetzung (130) aus verschiedenen chemischen Substanzen (132) zu jeder der Vielzahl von Proben (108), wobei die der Vielzahl von Proben (108) zugegebenen Zusammensetzungen (130) verschieden voneinander sind, das Verarbeiten der Vielzahl von Proben (108) zusammen mit den Zusammensetzungen (130) aus chemischen Substanzen (132) mittels des Analysesystems (112) und das Identifizieren jeder der Vielzahl von Proben (108) basierend auf einem Nachweis von Substanznachweissignalmustern des Massenspektrometers (104), die Substanznachweissignale einschließen, die die verschiedenen Zusammensetzungen (130) aus chemischen Substanzen (132) darstellen, umfasst.

2. Verfahren nach Anspruch 1, wobei die Zusammensetzung (130) aus verschiedenen chemischen Substanzen (132) der Probe (108) vor, während oder nach dem Vorbereiten der Probe (108) zugegeben wird.

3. Verfahren nach Anspruch 1 oder 2, wobei die chemischen Substanzen (132) dafür ausgebildet sind zu verhindern, dass sie auf einer stationären Phase des Flüssigchromatographen (102) zurückgehalten werden.

4. Verfahren nach Anspruch 3, wobei die Polarität und das Molekulargewicht der chemischen Substanzen (132) so an die stationäre Phase des Flüssigchromatographen (102) angepasst werden, dass verhindert wird, dass die chemischen Substanzen (132) auf der stationären Phase des Flüssigchromatographen (102) zurückgehalten werden.

5. Verfahren nach Anspruch 4, wobei die Polarität der chemischen Substanzen (132) mittels Verwenden eines Gemisches aus isobaren Oligomeren oder Isotopen der chemischen Substanzen (132) angepasst wird.

6. Verfahren nach Anspruch 3 oder 4, wobei das Molekulargewicht durch Verwendung von Homologen, Derivaten oder Isotopenmarkierung der chemischen Substanzen (132) angepasst wird.

7. Verfahren nach Anspruch 4, wobei die Polarität der chemischen Substanzen (132) mittels Verwenden eines Gemisches aus Oligomeren oder Derivaten der chemischen Substanzen (132) angepasst wird.

8. Verfahren nach Anspruch 7, wobei jede Oligomerkomponente eine Markierungsgruppe (134) zum Molekulargewichtskodieren aufweist, die intakt gemessen wird oder während eines massenspektrometrischen Prozesses freigesetzt und mittels des Massenspektrometers (104) gemessen wird.

9. Verfahren nach einem der Ansprüche 1 bis 8, wobei die Probe (108) mindestens einen Analyten von Interesse umfasst, wobei die chemischen Substanzen (132) chemische Isotope sind und/oder eine ähnliche Polarität wie der Analyt von Interesse aufweisen.

10. Verfahren nach einem der Ansprüche 1 bis 9, wobei die chemischen Substanzen (132) polare Molekülgruppen (136) und lipophile Molekülgruppen (138) umfassen.

11. Verfahren nach Anspruch 10, wobei die chemischen Substanzen (132) aus monomeren Blöcken mit einer Struktur von (polar)ₙ-(lipophil)ₘ gebildet werden, wobei (polar) eine polare Molekülgruppe (136) darstellt, (lipophil) eine lipophile Molekülgruppe (140) darstellt und n, m ganze Zahlen größer als 0 sind.

12. Verfahren nach Anspruch 10, wobei die chemischen Substanzen (132) aus monomeren Bausteinen n*(polar) und m*(lipophil) gebildet werden, die zufällig polymerisiert werden, wobei (polar) eine polare Molekülgruppe (136) darstellt, (lipophil) eine lipophile Molekülgruppe (138) darstellt und n, m ganze Zahlen größer als 0 sind.

13. Verfahren nach einem der Ansprüche 1 bis 12, wobei die Anzahl an Zusammensetzungen (130) der Anzahl an Flüssigchromatographiekanälen (112) entspricht.

14. Verfahren nach einem der Ansprüche 1 bis 13, wobei jede chemische Substanz (132) eine isobare Oligomergruppe (140) und mindestens eine Molekulargewicht-kodierende Gruppe (142) umfasst, wobei sich die isobare Oligomergruppe (140) und die Molekulargewicht-kodierende Gruppe (142) der verschiedenen chemischen Substanzen (132) voneinander unterscheiden.

## Revendications

1. Procédé de suivi d'une identité d'échantillon au cours d'un processus dans un système d'analyse (112), dans lequel le système d'analyse (112) comprend un chromatographe liquide (102) et un spectromètre de masse (104), le procédé comprenant :
- la fourniture d'un échantillon (108),
- l'ajout d'une composition (130) de différentes substances chimiques (132) à l'échantillon (108) avec une concentration supérieure à un niveau de détection du spectromètre de masse (104),
- le traitement de l'échantillon (108) conjointement avec la composition (130) au moyen du système d'analyse (112),
- la détection et la mesure d'un composant et/ou de composants de l'échantillon (108) au moyen du spectromètre de masse (104),
- la détection et la mesure de la composition (130) ou de parties de la composition (130) de différentes substances chimiques (132) au moyen du spectromètre de masse (104)
- l'identification de l'échantillon (108) en se basant sur une détection d'un modèle de signaux de détection de substances du spectromètre de masse (104) incluant les signaux de détection de substances représentant la composition (130) de substances chimiques (132), le chromatographe liquide (102) comprenant une station de séparation de chromatographie liquide (110) comprenant une pluralité de canaux de chromatographie liquide (112), le procédé comprenant en outre la fourniture d'une pluralité d'échantillons (108), l'ajout d'une composition (130) de différentes substances chimiques (132) à chacun de la pluralité d'échantillons (108), les compositions (130) ajoutées à la pluralité d'échantillons (108) étant différentes les unes des autres, le traitement de la pluralité d'échantillons (108) conjointement avec les compositions (130) de substances chimiques (132) au moyen du système d'analyse (112), et l'identification de chacun de la pluralité d'échantillons (108) en se basant sur une détection de modèles de signaux de détection de substances du spectromètre de masse (104) incluant les signaux de détection de substances représentant les différentes compositions (130) de substances chimiques (132).

2. Procédé selon la revendication 1, dans lequel la composition (130) de différentes substances chimiques (132) est ajoutée à l'échantillon (108) avant, pendant ou après la préparation de l'échantillon (108).

3. Procédé selon la revendication 1 ou 2, dans lequel les substances chimiques (132) sont conçues pour empêcher la rétention de celles-ci sur une phase stationnaire du chromatographe liquide (102).

4. Procédé selon la revendication 3, dans lequel la polarité et le poids moléculaire des substances chimiques (132) sont adaptés à la phase stationnaire du chromatographe liquide (102) de sorte que les substances chimiques (132) sont empêchées d'être retenues sur la phase stationnaire du chromatographe liquide (102).

5. Procédé selon la revendication 4, dans lequel la polarité des substances chimiques (132) est adaptée au moyen de l'utilisation d'un mélange d'oligomères isobares ou d'isotopes des substances chimiques (132).

6. Procédé selon la revendication 3 ou 4, dans lequel le poids moléculaire est adapté en utilisant des homologues, des dérivés ou un marquage par isotopes des substances chimiques (132).

7. Procédé selon la revendication 4, dans lequel la polarité des substances chimiques (132) est adaptée au moyen de l'utilisation d'un mélange d'oligomères ou de dérivés des substances chimiques (132).

8. Procédé selon la revendication 7, dans lequel chaque composant oligomère a un groupe de marquage (134) pour le codage du poids moléculaire qui est mesuré intact ou libéré pendant un processus de spectrométrie de masse et mesuré au moyen du spectromètre de masse (104).

9. Procédé selon l'une quelconque des revendications 1 à 8, dans lequel l'échantillon (108) comprend au moins un analyte d'intérêt, dans lequel les substances chimiques (132) sont des isotopes chimiques et/ou ont une polarité similaire à celle de l'analyte intérêt.

10. Procédé selon l'une quelconque des revendications 1 à 9, dans lequel les substances chimiques (132) comprennent des groupes moléculaires polaires (136) et des groupes moléculaires lipophiles (138).

11. Procédé selon la revendication 10, dans lequel les substances chimiques (132) sont formées à partir de blocs monomères ayant une structure (polaire)ₙ-(lipophile)ₘ, dans lequel (polaire) représente un groupe moléculaire polaire (136), (lipophile) représente un groupe moléculaire lipophile (140) et n, m sont des entiers supérieurs à 0.

12. Procédé selon la revendication 10, dans lequel les substances chimiques (132) sont formées à partir de blocs de construction monomères n*(polaire) et m*(lipophile) qui sont polymérisés aléatoirement, dans lequel (polaire) représente un groupe moléculaire polaire (136), (lipophile) représente un groupe moléculaire lipophile (138) et n, m sont des entiers supérieurs à 0.

13. Procédé selon l'une quelconque des revendications 1 à 12, dans lequel le nombre de compositions (130) correspond au nombre de canaux de chromatographie liquide (112).

14. Procédé selon l'une quelconque des revendications 1 à 13, dans lequel chaque substance chimique (132) comprend un groupe oligomère isobare (140) et au moins un groupe de codage de poids moléculaire (142), dans lequel le groupe oligomère isobare (140) et le groupe de codage de poids moléculaire (142) des différentes substances chimiques (132) diffèrent l'un de l'autre.
